# EUROPÄISCHE PATENTSCHRIFT

(11) **EP 2 684 823 B1**
(45) Veröffentlichungstag und Bekanntmachung des Hinweises auf die Patenterteilung: **03.09.2014**
(21) Anmeldenummer: 12175745.4
(22) Anmeldetag: 10.07.2012
(51) Int. Cl.: B65G 47/84, B65G 57/14

(54) **Vorrichtung zur Bildung und Weitergabe von Blisterstapeln**
Device for forming and transferring blister stacks
Dispositif de formation et de transfert de piles d'emballages blister

(43) Veröffentlichungstag der Anmeldung: 15.01.2014
(73) Patentinhaber: UHLMANN PAC-SYSTEME GmbH & Co. KG, 88471 Laupheim (DE)
(72) Erfinder: Hähnel, Bernd, 76297 Stutensee (DE); Huchler, Joachim, 88484 Gutenzell (DE)
(74) Vertreter: Wächter, Jochen

(56) Entgegenhaltungen:
- DE-A1- 3 708 604
- US-A- 4 399 905

## Beschreibung

Die vorliegende Erfindung betrifft eine Vorrichtung zur Bildung und Weitergabe von Blisterstapeln.

In pharmazeutischen Produktionslinien besteht an der Schnittstelle zwischen Blistermaschine und Kartonierer oft die Aufgabe, die ausgestanzten Blister durch eine geeignete Vorrichtung aufzunehmen, zu gruppieren und an den Packguttransport des Kartonierers weiterzuleiten. Hierfür existiert eine Reihe von Möglichkeiten.

Die bislang bekannten Vorrichtungen zur Bildung und Weitergabe von Blisterstapeln benötigen jedoch meist einen erheblichen Bauraum. Außerdem bleiben sich die Blister meist im freien Fall selbst überlassen, sodass abhängig von der Stapelhöhe des Blisterstapels die Leistung der Vorrichtung auch von der Fallbeschleunigung begrenzt ist. Außerdem können sich Blisterverpackungen beim Fallen verdrehen oder bei der Landung nach oben zurückspringen, was ebenfalls für eine sichere Funktionsweise der Vorrichtung nachteilig ist.

DE 37 08 604 A1 beschreibt eine Vorrichtung zur Übergabe von Produktstapeln, die ein umlaufendes Transportband oder mehrere parallel umlaufende Transportbänder aufweist. Jedes Transportband umfasst eine Mehrzahl von Mitnehmern, die horizontal ausgerichtet sind, wenn sie von einer Aufnahmeposition der Produktstapel in eine Abgabeposition der Produktstapel bewegt werden, damit die Produktstapel auf ihnen aufliegen können.

Der vorliegenden Erfindung liegt die Aufgabe zugrunde, eine Vorrichtung zur Bildung und Weitergabe von Blisterstapeln zu schaffen, die robust ist, die einen geringen Bauraum benötigt und bei der die einzelnen Blister sicher von einer Blisteraufnahmeposition zu einer Blisterabgabeposition überführt werden.

Diese Aufgabe wird durch die Merkmale des Anspruchs 1 gelöst.

Erfindungsgemäß umfasst die Vorrichtung zur Bildung und Weitergabe von Blisterstapeln drei unabhängige Antriebseinheiten und drei umlaufende Überführungseinheiten, wobei jede der drei Überführungseinheiten von jeweils einer der drei Antriebseinheiten unabhängig voneinander ansteuerbar ist. Jede Überführungseinheit weist mindestens einen Transportriemen auf, an dem jeweils zwei Mitnahmeelemente versetzt zueinander und drehbar befestigt sind. Jedes Mitnahmeelement ist derart zwangsgeführt, dass es zumindest in einem Überführungsbereich zwischen einer Blisteraufnahmeposition und einer unterhalb der Blisteraufnahmeposition angeordneten Blisterabgabeposition eine horizontale Ausrichtung zeigt. Die Antriebseinheiten sind derart angesteuert, dass sich zwei Mitnahmeelemente zweier verschiedener Überführungseinheiten jeweils in einem vorbestimmten Abstand zueinander von der Blisteraufnahmeposition zur Blisterabgabeposition bewegen und somit in dem Überführungsbereich den Blisterstapel von oben und unten zwischen sich geklemmt halten.

Mit dieser Ausgestaltung kann der Bauraum der Vorrichtung minimiert werden, wobei gleichzeitig eine sichere Funktionsweise der Blisterübergabe gewährleistet ist.

Vorzugsweise weist jede Überführungseinheit zwei Transportriemen auf, die parallel zueinander und voneinander beabstandet angeordnet sind. Auf diese Weise können die Mitnahmeelemente symmetrisch zwischen den beiden Transportriemen einer jeden Überführungseinheit angeordnet sein, was zum gleichmäßigen und sicheren Betrieb der Vorrichtung beiträgt.

Vorzugsweise ist jedes Mitnahmeelement kammförmig ausgestaltet. Dies liefert den Vorteil, dass bei Vorliegen von kammförmigen Zellenwinkeln im Bereich des Produkttransports des Kartonierers, d.h. an der Blisterabgabeposition, auch bei kontinuierlichem Betrieb des Packguttransports ein Durchtritt der kammförmigen Mitnahmeelemente durch die kammförmigen Zellenwinkel möglich ist.

Vorzugsweise weist jedes Mitnahmeelement an einem ersten Ende eine horizontal verlaufende Stange auf, die drehbar in einem am entsprechenden Transportriemen befestigten Aufnahmeelement gelagert ist. Auf diese Weise gelingt es, die drehbare Lagerung der Mitnahmeelemente gegenüber den Transportriemen auf einfache Weise umzusetzen.

Dabei ist die Stange vorzugsweise mit einem winkligen Führungshebel verbunden, der an seinen beiden Schenkeln zwei Kurvenrollen aufweist, die in zwei Führungsnuten in einer Lagerplatte der Vorrichtung geführt sind. Mit dieser einfachen Zwangsführung gelingt es, die Mitnahmeelemente im Überführungsbereich zwischen der Blisteraufnahmeposition und der Blisterabgabeposition horizontal zu halten und gleichzeitig den Platzbedarf für die Mitnahmeelemente während des sonstigen Umlaufs auf ein Minimum zu reduzieren.

Vorzugsweise verlaufen die Transportriemen jeder Überführungseinheit parallel zueinander und zeigen einen im Wesentlichen viereckigen Verlauf, wobei in jeder Ecke des Vierecks jeweils eine Umlenkrolle für jeden Transportriemen angeordnet ist. Mit dieser Ausgestaltung kann auch die Form der Führungsnut in den Lagerplatten besonders einfach gestaltet werden, und eine besonders kompakte Bauform ist die Folge.

In einer bevorzugten Ausführungsform ist der Transportriemen als Zahnriemen ausgebildet und die Umlenkrollen sind als Zahnriemenräder ausgebildet.

Vorzugsweise ist lediglich eine der Umlenkrollen für jeden Transportriemen von der jeweiligen Antriebseinheit angetrieben, während die übrigen Umlenkrollen lose mitlaufen.

Im Sinne einer feinen Ansteuerung der einzelnen Überführungseinheiten sind die Antriebseinheiten vorzugsweise als Servomotoren ausgebildet.

Ein wesentlicher Vorteil der drei unterschiedlichen Überführungseinheiten wird vorzugsweise dadurch ausgenutzt, dass die drei Antriebseinheiten derart angesteuert sind, dass sich, während sich zwei Mitnahmeelemente zweier verschiedener Überführungseinheiten in einem vorbestimmten Abstand zueinander von der Blisteraufnahmeposition zur Blisterabgabeposition bewegen, ein Mitnahmeelement der verbleibenden dritten Überführungseinheit in die Blisteraufnahmeposition bewegt. Auf diese Weise können noch während der Überführung eines Blisterstapels von der Blisteraufnahmeposition in die Blisterabgabeposition neue Blisterverpackungen auf das Mitnahmeelement der dritten Überführungseinheit abgelegt werden, wodurch die Leistung der Gesamtvorrichtung erhöht wird, ein kontinuierlicher Betrieb gewährleistet wird und außerdem die Möglichkeit geschaffen wird, Fehlstellen in der Blisterzuführung auszugleichen.

Weitere Merkmale und Vorteile der vorliegenden Erfindung ergeben sich aus der nachfolgenden Beschreibung unter Bezugnahme auf die Zeichnungen.
- Fig. 1: ist eine schematische Perspektivansicht einer Ausführungsform der erfindungsgemäßen Vorrichtung zur Bildung und Weitergabe von Blisterstapeln von einer ersten Seite;
- Fig. 2: ist eine schematische Perspektivansicht der Vorrichtung zur Bildung und Weitergabe von Blisterstapeln aus Fig. 1 von einer zweiten Seite;
- Fig. 3: ist eine schematische Perspektivansicht der inneren Komponenten der Vorrichtung zur Bildung und Weitergabe von Blisterstapeln aus Fig. 1; und
- Fig. 4 bis 7: zeigen den Ablauf der Bildung und Weitergabe von Blisterstapeln mit der Vorrichtung aus Fig. 1 in Seitenansicht.

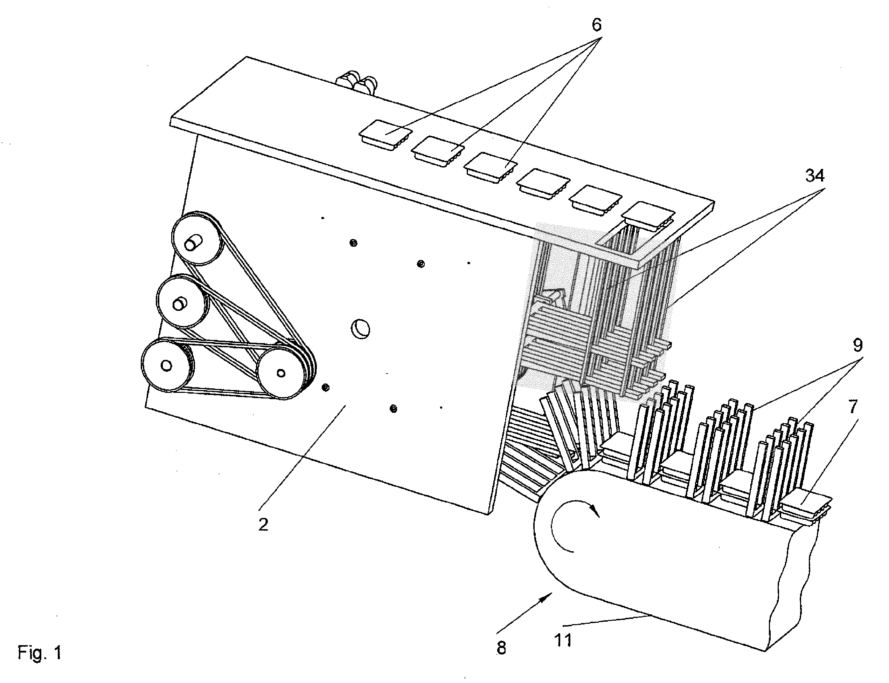

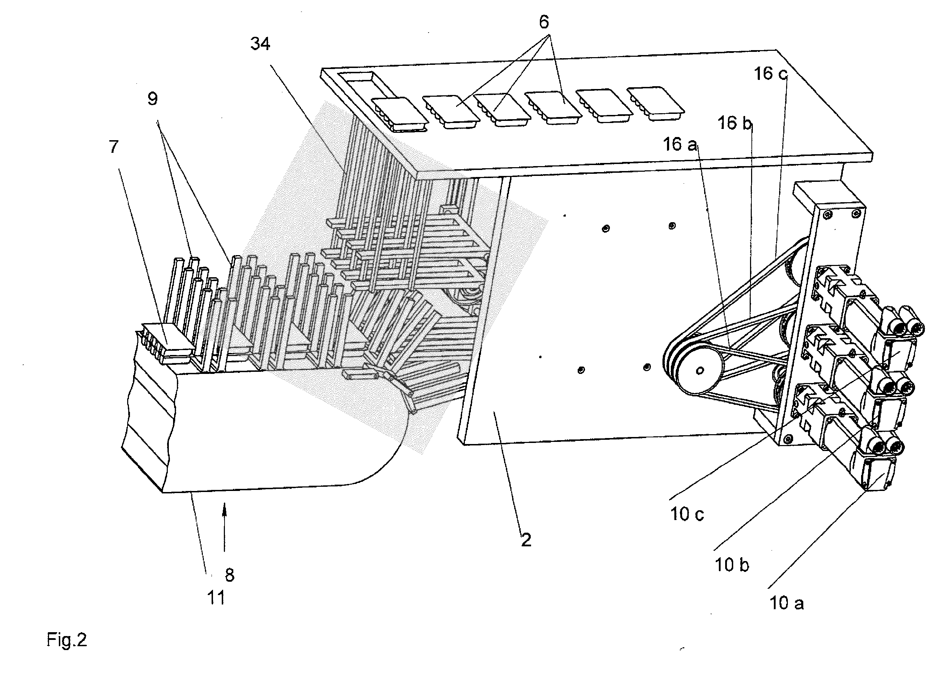

Die in Fig. 1 und 2 dargestellte Vorrichtung zur Bildung und Weitergabe von Blisterstapeln umfasst zwei Lagerplatten 2, die zwischen sich einen Zwischenraum bilden, in dem drei umlaufende Überführungseinheiten 4a, 4b, 4c angeordnet sind. Die Überführungseinheiten 4a, 4b, 4c nehmen Blisterverpackungen 6 auf, die von einer nicht dargestellten Zuführvorrichtung herantransportiert werden, und geben durch Übereinanderstapelung dieser Blisterverpackungen 6 erzielte Blisterstapel 7 an eine Transportvorrichtung 8 ab, welche die Blisterstapel 7 zur weiteren Verarbeitung weiterfördert. Die Blisterverpackungen 6 werden hierbei der Vorrichtung zur Bildung und Weitergabe von Blisterstapeln mittels der nicht dargestellten Zuführvorrichtung vorzugsweise von oben zugeführt, in der Regel einzeln und in vorbestimmten zeitlichen Abständen. Derartige Zuführvorrichtungen sind allgemein bekannt. Beispielsweise können Saugbänder verwendet werden, an denen die Blisterverpackungen 6 hängend transportiert werden. Auch andere Zuführvorrichtungen sind denkbar, welche die in einer Blistermaschine produzierten, ausgestanzten Blisterverpackungen 6 in die Vorrichtung zur Bildung und Weitergabe von Blisterstapeln übergeben. Die Transportvorrichtung 8 zum Weitertransport der gebildeten Blisterstapel 7 hinter der erfindungsgemäßen Vorrichtung zur Bildung und Weitergabe von Blisterstapeln hingegen ist üblicherweise eine umlaufende Produkttransportkette einer Kartoniermaschine, in der die gebildeten Blisterstapel 7 in entsprechende Faltschachteln eingeschoben werden. Die Transportvorrichtung 8 weist mehrere Mitnehmereinheiten 9 auf, auch Zellenwinkel genannt, die die einzelnen Abteile der Transportvorrichtung 8 definieren. Vorzugsweise sind diese Mitnehmereinheiten 9 kammförmig ausgebildet und ragen nach außen von einer umlaufenden Kette 11 bzw. einem Riemen ab.

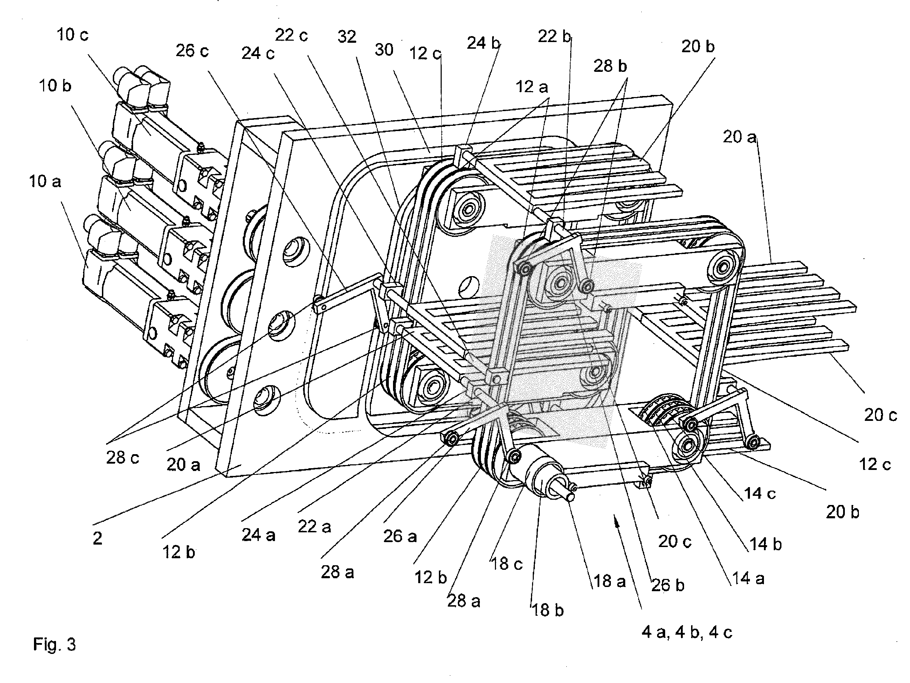

Die Vorrichtung zur Bildung und Weitergabe von Blisterstapeln weist drei unabhängige Antriebseinheiten 10a, 10b, 10c auf, die die drei Überführungseinheiten 4a, 4b, 4c unabhängig voneinander ansteuern. Im konkreten Ausführungsbeispiel (siehe insbesondere Fig. 3) weist jede Überführungseinheit 4a, 4b, 4c zwei Transportriemen 12a, 12b, 12c auf, die parallel zueinander und beabstandet voneinander angeordnet sind. Im Einzelnen werden die beiden inneren Transportriemen 12a von der ersten Antriebseinheit 10a angetrieben, während die beiden mittleren Transportriemen 12b von der zweiten Antriebseinheit 10b angetrieben werden und die beiden äußeren Transportriemen 12c von der dritten Antriebseinheit 10c angetrieben werden.

Alle Transportriemen 12a, 12b, 12c zeigen einen im Wesentlichen viereckigen Verlauf und verlaufen parallel zueinander. In jeder Ecke des von den Transportriemen 12a, 12b, 12c gebildeten abgerundeten Vierecks ist jeweils eine Umlenkrolle 14a, 14b, 14c für jeden Transportriemen 12a, 12b, 12c angeordnet, wobei in der bevorzugten Ausführungsform lediglich eine der Umlenkrollen 14a, 14b, 14c für jeden Transportriemen 12a, 12b, 12c von der jeweiligen Antriebseinheit 10a, 10b, 10c angetrieben ist, während die drei anderen Umlenkrollen 14a, 14b, 14c des jeweiligen Transportriemens 12a, 12b, 12c lediglich mitlaufen. Im dargestellten Ausführungsbeispiel der Fig. 3 sind nur die Umlenkrollen 14a, 14b, 14c im linken unteren Bereich des Vierecks angetrieben. In der dargestellten bevorzugten Ausführungsform sind die Umlenkrollen 14a, 14b, 14c als Zahnriemenräder ausgebildet und die Transportriemen 12a, 12b, 12c als Zahnriemen.

Die Kraftübertragung von den Antriebseinheiten 10a, 10b, 10c auf die Umlenkrollen 14a, 14b, 14c erfolgt im dargestellten Beispielsfall über Übertragungsriemen 16a, 16b, 16c und eine entsprechende verschachtelte Anordnung von Wellen 18a, 18b, 18c (Fig. 3) der Umlenkrollen 14a, 14b, 14c. Im dargestellten Beispielsfall ist die Welle 18a für die beiden inneren Umlenkrollen 14a als Vollwelle ausgebildet, während die beiden anderen Paare von Umlenkrollen 14b, 14c über zwei Wellen 18b, 18c angetrieben werden, die als Hohlwellen ausgebildet sind. Sämtliche Wellen 18a, 18b, 18c sind unabhängig voneinander drehbar. Selbstverständlich existieren viele andere Möglichkeiten der Kraftübertragung von den Antriebseinheiten 10a, 10b, 10c zu den Überführungseinheiten 4a, 4b, 4c.

Jede Überführungseinheit 4a, 4b, 4c weist neben den beiden Transportriemen 12a, 12b, 12c noch jeweils zwei Mitnahmeelemente 20a, 20b, 20c auf, die versetzt zueinander und drehbar an dem jeweiligen Transportriemen 12a, 12b, 12c befestigt sind. Genauer gesagt sind die beiden Mitnahmeelemente 20a an den Transportriemen 12a befestigt, die Mitnahmeelemente 20b an den Transportriemen 12b und die Mitnahmeelemente 20c an den Transportriemen 12c. Bezogen auf den Umlauf der zugehörigen Überführungseinheit 4a, 4b, 4c sind die zwei Mitnahmeelemente 20a, 20b, 20c jeder Überführungseinheit 4a, 4b, 4c jeweils vorzugsweise genau gegenüberliegend angeordnet, also um 180° versetzt.

Die Mitnahmeelemente 20a, 20b, 20c sind vorzugsweise geradlinig und flächig ausgestaltet und in einer bevorzugten Ausführungsform kammförmig ausgebildet. In der dargestellten Ausführungsform weist jedes Mitnahmeelement 20a, 20b, 20c an einem ersten Ende eine horizontal verlaufende Stange 22a, 22b, 22c auf, die jeweils drehbar in einem an dem entsprechenden Transportriemen 12a, 12b, 12c befestigten Aufnahmeelement 24a, 24b, 24c gelagert ist. Die Aufnahmeelemente 24a, 24b, 24c können beispielsweise vom Transportriemen 12a, 12b, 12c nach außen abragende Stifte mit entsprechenden Lagerbuchsen für die Stangen 22a, 22b, 22c sein.

Jede Stange 22a, 22b, 22c ist mit einem winkligen Führungshebel 26a, 26b, 26c verbunden, der an seinen beiden Schenkeln zwei Kurvenrollen 28a, 28b, 28c aufweist. Die zwei Kurvenrollen 28a, 28b, 28c eines Führungshebels sind in zwei versetzt zueinander angeordneten Führungsnuten 30, 32 in einer der Lagerplatten 2 der Vorrichtung geführt. Die Führungsnuten 30, 32 zeigen dabei vorzugsweise denselben Verlauf. Die andere Lagerplatte 2 weist identische Führungsnuten 30, 32 auf.

Es ist von Vorteil, wenn aufeinanderfolgende Mitnahmeelemente 20a, 20b, 20c verschiedener Überführungseinheiten 4a, 4b, 4c ihre Führungshebel 26a, 26b, 26c jeweils auf verschiedenen Seiten der entsprechenden Stange 22a, 22b, 22c aufweisen und somit die Kurvenrollen 28a, 28b, 28c aufeinanderfolgender Mitnahmeelemente 20a, 20b, 20c auch jeweils abwechselnd in den Führungsnuten 30, 32 der einen Lagerplatte 2 und der gegenüberliegenden Lagerplatte 2 geführt werden. Dadurch gelingt es auch bei eng aneinanderliegenden Mitnahmeelementen 20a, 20b, 20c, eine gegenseitige Behinderung der Führungshebel 26a, 26b, 26c bzw. Kurvenrollen 28a, 28b, 28c zu verhindern. Die Tatsache, dass genau zwei Mitnahmeelemente 20a, 20b, 20c pro Überführungseinheit 4a, 4b, 4c vorgesehen sind und insgesamt drei Überführungseinheiten 4a, 4b, 4c vorliegen, führt außerdem dazu, dass die beiden Mitnahmeelemente 20a, 20b, 20c jeder Überführungseinheit 4a, 4b, 4c ihre Führungshebel 26a, 26b, 26c (und somit auch die Kurvenrollen 28a, 28b, 28c) jeweils auf gegenüberliegenden Seiten aufweisen.

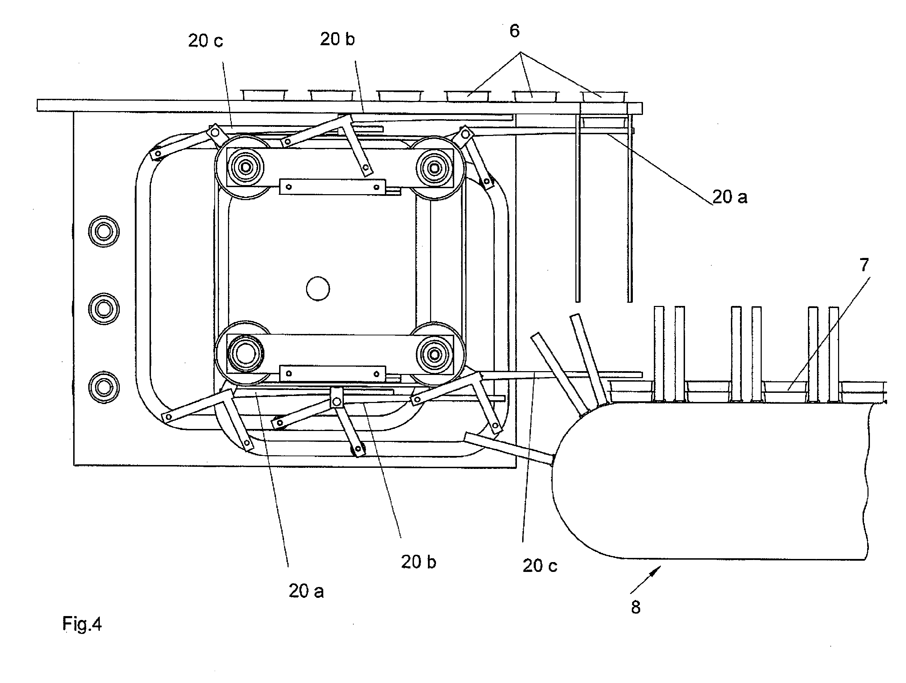

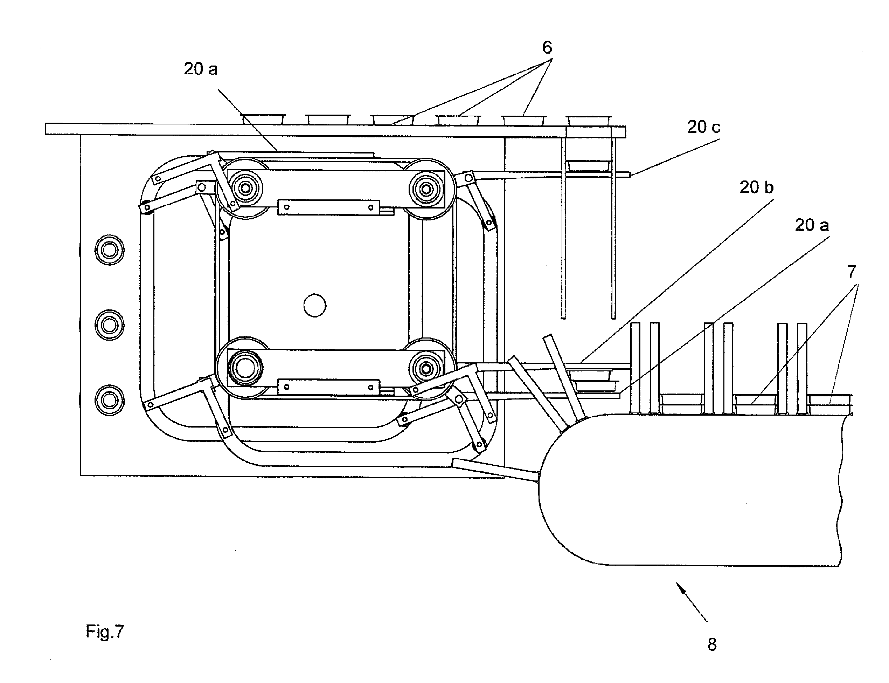

Selbstverständlich existieren viele andere Möglichkeiten, die Mitnahmeelemente 20a, 20b, 20c auf geeignete Weise zu führen. Wichtig ist dabei aber immer, dass jedes Mitnahmeelement 20a, 20b, 20c derart zwangsgeführt ist, dass es zumindest in einem Überführungsbereich zwischen einer Blisteraufnahmeposition (siehe die Position des Mitnahmeelements 20a rechts oben in Fig. 4) und einer unterhalb der Blisteraufnahmeposition angeordneten Blisterabgabeposition (siehe die Position des Mitnahmeelements 20a rechts unten in Fig. 7) eine horizontale Ausrichtung zeigt. Die Antriebseinheiten 10a, 10b, 10c sind so angesteuert, dass sich immer zwei Mitnahmeelemente 20a, 20b, 20c zweier verschiedener Überführungseinheiten 4a, 4b, 4c jeweils in einem vorbestimmten Abstand zueinander von der Blisteraufnahmeposition zur Blisterabgabeposition bewegen (vorzugsweise ausschließlich vertikal) und somit in dem Überführungsbereich den Blisterstapel 7 von oben und unten zwischen sich geklemmt halten. Die Führung der Blisterstapel 7 im Überführungsbereich kann zusätzlich durch vertikal verlaufende, feststehende Führungsstäbe 34 unterstützt werden.

Die drei Antriebseinheiten 10a, 10b, 10c sind derart angesteuert, dass sich, während sich die zwei Mitnahmeelemente 20a, 20b, 20c zweier verschiedener Überführungseinheiten 4a, 4b, 4c in einem vorbestimmten Abstand zueinander von der Blisteraufnahmeposition zur Blisterabgabeposition bewegen, ein Mitnahmeelement 20a, 20b, 20c der verbleibenden dritten Überführungseinheit 4a, 4b, 4c in die Blisteraufnahmeposition bewegt. Auf diese Weise können bereits während der Übergabebewegung des vorherigen Blisterstapels 7 wieder neue Blisterverpackungen 6 in der Vorrichtung gestapelt werden.

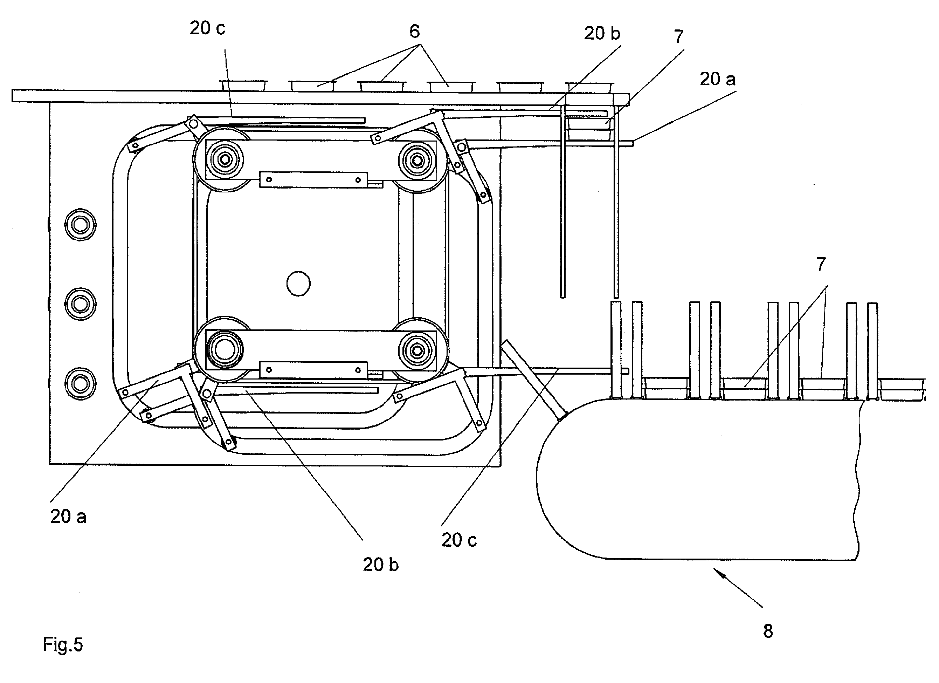

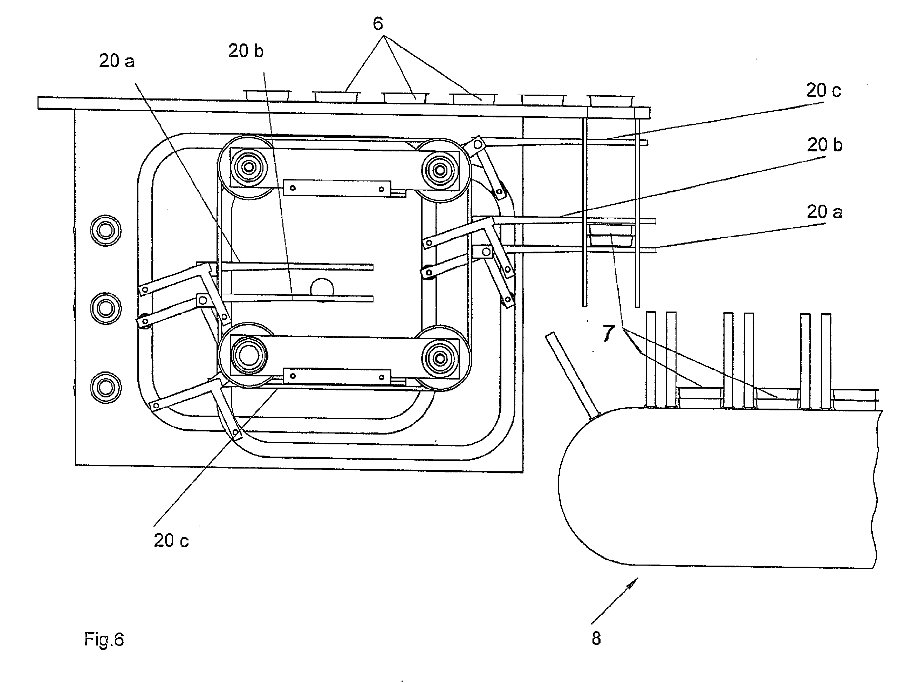

Die Funktionsweise der erfindungsgemäßen Vorrichtung soll nun anhand von Fig. 4 bis 7 näher erläutert werden. In Fig. 4 ist zunächst das Mitnahmeelement 20a rechts oben in einer Blisteraufnahmeposition angeordnet. In dieser Position dient es als Auflage für die zu stapelnden Blisterverpackungen 6, die von oben durch die nicht dargestellte Zuführvorrichtung herangeführt werden. Idealerweise bewegt sich das Mitnahmeelement 20a beim Auffüllen des Blisterstapels 7 schrittweise nach unten, um die schrittweise Befüllung der Vorrichtung zu gewährleisten. Wenn nun, wie in Fig. 5 dargestellt, ein Blisterstapel 7 gewünschter Höhe auf dem Mitnahmeelement 20a gebildet ist, wird der Blisterstapel 7 von dem Mitnahmeelement 20b rechts oben abgedeckt und der Blisterstapel 7 somit zwischen den beiden Mitnahmeelementen 20a und 20b eingeklemmt. In dieser Stellung werden die beiden Mitnahmeelemente 20a, 20b nach unten abgesenkt (siehe Fig. 6), während das Mitnahmeelement 20c der dritten Überführungseinheit 4c rechts oben bereits wieder die Blisteraufnahmeposition belegt. Bis also der Blisterstapel 7, der zwischen den Mitnahmeelementen 20a und 20b gehalten wird, in die Transportvorrichtung 8 übergeben wird, kann auf dem Mitnahmeelement 20c bereits wieder der nächste Blisterstapel 7 gebildet werden. Durch die unabhängige Bewegungssteuerung der drei Überführungseinheiten 4a, 4b, 4c gelingt es somit, immer jeweils zwei Mitnahmeelemente 20a, 20b, 20c zweier unterschiedlicher Überführungseinheiten 4a, 4b, 4c in unterschiedlicher Reihenfolge abwechselnd als Auflageelement für einen Blisterstapel 7 bzw. als Abdeckelement für einen Blisterstapel 7 zu verwenden und somit einen Kreislauf zu schaffen, der einen kontinuierlichen Betrieb gewährleistet.

Neben der dargestellten ausschließlich vertikalen Bewegung der Mitnahmeelemente 20a, 20b, 20c im Überführungsbereich sind auch andere Bewegungsmuster denkbar, je nach Geometrie der Gesamtanordnung. Ebenso sind mehrbahnige Ausgestaltungen möglich.

## Patentansprüche

1. Vorrichtung zur Bildung und Weitergabe von Blisterstapeln (7), mit
mindestens einer umlaufenden Überführungseinheit (4a, 4b, 4c), wobei jede Überführungseinheit (4a, 4b, 4c) mindestens einen Transportriemen (12a, 12b, 12c) aufweist, an dem jeweils zwei Mitnahmeelemente (20a, 20b, 20c) versetzt zueinander und drehbar befestigt sind;
wobei jedes Mitnahmeelement (20a, 20b, 20c) derart zwangsgeführt ist, dass es zumindest in einem Überführungsbereich zwischen einer Blisteraufnahmeposition und einer unterhalb der Blisteraufnahmeposition angeordneten Blisterabgabeposition eine horizontale Ausrichtung zeigt;
**dadurch gekennzeichnet, dass**
die Vorrichtung drei unabhängige Antriebseinheiten (10a, 10b, 10c) aufweist;
die Vorrichtung drei umlaufende Überführungseinheiten (4a, 4b, 4c) aufweist, wobei jede der drei Überführungseinheiten (4a, 4b, 4c) von jeweils einer der drei Antriebseinheiten (10a, 10b, 10c) unabhängig voneinander ansteuerbar ist; und
dass die Antriebseinheiten (10a, 10b, 10c) derart angesteuert sind, dass sich zwei Mitnahmeelemente (20a, 20b, 20c) zweier verschiedener Überführungseinheiten (4a, 4b, 4c) jeweils in einem vorbestimmten Abstand zueinander von der Blisteraufnahmeposition zur Blisterabgabeposition bewegen und somit in dem Überführungsbereich den Blisterstapel (7) von oben und unten zwischen sich geklemmt halten.

2. Vorrichtung nach Anspruch 1, **dadurch gekennzeichnet, dass** jede Überführungseinheit (4a, 4b, 4c) zwei Transportriemen (12a, 12b, 12c) aufweist, die parallel zueinander und voneinander beabstandet angeordnet sind.

3. Vorrichtung nach Anspruch 1 oder 2, **dadurch gekennzeichnet, dass** jedes Mitnahmeelement (20a, 20b, 20c) kammförmig ausgestaltet ist.

4. Vorrichtung nach einem der vorangehenden Ansprüche, **dadurch gekennzeichnet, dass** jedes Mitnahmeelement (20a, 20b, 20c) an einem ersten Ende eine horizontal verlaufende Stange (22a, 22b, 22c) aufweist, die drehbar in einem am entsprechenden Transportriemen (12a, 12b, 12c) befestigten Aufnahmeelement (24a, 24b, 24c) gelagert ist.

5. Vorrichtung nach Anspruch 4, **dadurch gekennzeichnet, dass** die Stange (22a, 22b, 22c) mit einem winkligen Führungshebel (26a, 26b, 26c) verbunden ist, der an seinen beiden Schenkeln zwei Kurvenrollen (28a, 28b, 28c) aufweist, die in zwei Führungsnuten (30, 32) in einer Lagerplatte (2) der Vorrichtung geführt sind.

6. Vorrichtung nach einem der vorangehenden Ansprüche, **dadurch gekennzeichnet, dass** die Transportriemen (12a, 12b, 12c) jeder Überführungseinheit (4a, 4b, 4c) parallel zueinander verlaufen und einen im Wesentlichen viereckigen Verlauf zeigen, wobei in jeder Ecke des Vierecks jeweils eine Umlenkrolle (14a, 14b, 14c) für jeden Transportriemen (12a, 12b, 12c) angeordnet ist.

7. Vorrichtung nach Anspruch 6, **dadurch gekennzeichnet, dass** die Transportriemen (12a, 12b, 12c) als Zahnriemen ausgebildet sind, und dass die Umlenkrollen (14a, 14b, 14c) als Zahnriemenräder ausgebildet sind.

8. Vorrichtung nach einem der vorangehenden Ansprüche, **dadurch gekennzeichnet, dass** eine der Umlenkrollen (14a, 14b, 14c) für jeden Transportriemen (12a, 12b, 12c) von derjeweiligen Antriebseinheit (10a, 10b, 10c) angetrieben ist.

9. Vorrichtung nach einem der vorangehenden Ansprüche, **dadurch gekennzeichnet, dass** die drei Antriebseinheiten (10a, 10b, 10c) Servomotoren sind.

10. Vorrichtung nach einem der vorangehenden Ansprüche, **dadurch gekennzeichnet, dass** die drei Antriebseinheiten (10a, 10b, 10c) derart angesteuert sind, dass sich, während sich zwei Mitnahmeelemente (20a, 20b, 20c) zweier verschiedener Überführungseinheiten (4a, 4b, 4c) in einem vorbestimmten Abstand zueinander von der Blisteraufnahmeposition zur Blisterabgabeposition bewegen, ein Mitnahmeelement (20a, 20b, 20c) der verbleibenden dritten Überführungseinheit (4a, 4b, 4c) in die Blisteraufnahmeposition bewegt.

## Claims

1. Device for forming and transferring blister stacks (7), having at least one revolving transfer unit (4a, 4b,4c) wherein each transfer unit (4a, 4b, 4c) has at least one transport belt (12a, 12b, 12c) on which two entrainment elements (20a, 20b, 20c) are fastened rotatable and off-set relative to one another; wherein each entrainment element (20a, 20b, 20c) is automatically guided so that it has a horizontal alignment at least in a transfer region between a blister pick-up position and a blister delivery position arranged underneath the blister pick-up position; **characterised in that** the device has three independent drive units (10a, 10b 10c); the device has three revolving transfer units (4a, 4b, 4c) wherein each of the three transfer units (34a, 4b, 4c) is controllable independently of one another by each one of the three drive units (10a, 10b, 10c); and that the drive units (10a, 10b, 10c) are controlled so that two entrainment elements (20a, 20b, 20c) of two different transfer units (4a, 4b, 4c) each move at a predetermined distance relative to one another from the blister pick-up position to the blister delivery position and thus in the transfer region hold the blister stack (7) clamped between them from above and below.

2. Device according to claim 1 **characterised in that** each transfer unit (4a, 4b, 4c) has two transport belts 12a, 12b, 12c) which are arranged parallel to one another and spaced from one another.

3. Device according to claim 1 or 2 **characterised in that** each entrainment element (20a, 20b, 20c) is designed comb-like.

4. Device according to one of the preceding claims **characterised in that** each entrainment element (20a, 20b, 20c) has at a first end a horizontally aligned rod (22a, 22b, 22c) which is mounted rotatable in a receiving element (24a, 24b, 24c) which is fixed on the corresponding transport belt (12a, 12b, 12c).

5. Device according to claim 4 **characterised in that** the rod (22a, 22b, 22c) is connected to an angled guide lever (26a, 26b, 26c) which has on its two arms two cam rollers (28a, 28b, 28c) which are guided in two guide grooves (30, 32) in a bearing plate (2) of the device.

6. Device according to one of the preceding claims **characterised in that** the transport belts (12a, 12b, 12c) of each transfer unit (4a, 4b, 4c) run parallel to one another and have a substantially square path wherein a guide roller (14a, 14b, 14c) is arranged for each transport belt (12a, 12b, 12c) in each corner of the square path.

7. Device according to claim 6 **characterised in that** the transport belts (12a, 12b, 12c) are designed as toothed belts and the guide rollers (14a, 14b, 14c) are designed as toothed belt wheels.

8. Device according to one of the preceding claims **characterised in that** one of the guide rollers (14a, 14b, 14c) for each transport belt (12a, 12b, 12c) is driven by the respective drive unit (10a, 10b, 10c).

9. Device according to one of the preceding claims **characterised in that** the three drive units (10a, 10b, 10c) are servo motors.

10. Device according to one of the preceding claims **characterised in that** the three drive units (10a, 10b, 10c) are controlled so that whilst the two entrainment elements (20a, 20b, 20c) of two different transfer units (4a, 4b, 4c) move at a predetermined distance relative to one another from the blister pick-up position to the blister delivery position, one entrainment element (20a, 20b, 20c) of the remaining third transfer unit (4a, 4b, 4c) moves into the blister pick-up position.

## Revendications

1. Dispositif pour former et acheminer des piles de blisters (7), comprenant
au moins une unité de transfert rotative (4a, 4b, 4c), chaque unité de transfert (4a, 4b, 4c) présentant au moins une courroie de transport (12a, 12b, 12c), sur laquelle sont respectivement fixés tournants et en déport mutuel deux éléments d'entraînement (20a, 20b, 20c) ;
chaque élément d'entraînement (20a, 20b, 20c) étant à guidage forcé de telle sorte qu'il présente une orientation horizontale au moins dans une zone de transfert entre une position de réception des blisters et une position de distribution des blisters sous-jacente à la position de réception ;
**caractérisé en ce que**
le dispositif présente trois unités d'entraînement (10a, 10b, 10c) indépendantes ;
le dispositif présente trois unités de transfert rotatives (4a, 4b, 4c), chacune des trois unités de transfert (4a, 4b, 4c) étant commandée indépendamment l'une de l'autre par respectivement l'une des trois unités d'entraînement (10a, 10b, 10c) ; et
que les unités d'entraînement (10a, 10b, 10c) sont commandées de telle sorte que deux éléments d'entraînement (20a, 20b, 20c) de deux unités de transfert différentes (4a, 4b, 4c) se déplacent respectivement à une distance mutuelle prédéfinie de la position de réception à la position de distribution des blisters et coincent ainsi entre eux, à partir du haut et du bas, la pile de blisters (7) dans la zone de transfert.

2. Dispositif selon la revendication 1, **caractérisé en ce que** chaque unité de transfert (4a, 4b, 4c) présente deux courroies de transport (12a, 12b, 12c), qui sont disposées parallèlement entre elles et à distance les unes des autres.

3. Dispositif selon l'une des revendications 1 et 2, **caractérisé en ce que** chaque élément d'entraînement (20a, 20b, 20c) est configuré en forme de peigne.

4. Dispositif selon l'une des revendications précédentes, **caractérisé en ce que** chaque élément d'entraînement (20a, 20b, 20c) présente à une première extrémité une tige horizontale (22a, 22b, 22c), logée tournante dans un élément de réception (24a, 24b, 24c) fixé sur la courroie de transport (12a, 12b, 12c) correspondante.

5. Dispositif selon la revendication 4, **caractérisé en ce que** la tige (22a, 22b, 22c) est assemblée avec un levier de guidage angulaire (26a, 26b, 26c), qui présente sur ses deux branches deux galets de came (28a, 28b, 28c), guidés dans deux rainures de guidage (30, 32) d'une plaque support (2) du dispositif.

6. Dispositif selon l'une des revendications précédentes, **caractérisé en ce que** les courroies de transport (12a, 12b, 12c) de chaque unité de transfert (4a, 4b, 4c) sont parallèles entre elles et présentent une allure essentiellement quadrangulaire, une poulie de renvoi (14a, 14b, 14c) pour chaque courroie de transport (12a, 12b, 12c) étant disposée dans chaque angle du quadrilatère.

7. Dispositif selon la revendication 6, **caractérisé en ce que** les courroies de transport (12a, 12b, 12c) sont réalisées sous forme de courroies dentées, et que les poulies de renvoi (14a, 14b, 14c) sont réalisées sous forme de pignons de courroies dentées.

8. Dispositif selon l'une des revendications précédentes, **caractérisé en ce que** l'une des poulies de renvoi (14a, 14b, 14c) pour chaque courroie de transport (12a, 12b, 12c) est entrainée par l'unité d'entraînement respective (10a, 10b, 10c).

9. Dispositif selon l'une des revendications précédentes, **caractérisé en ce que** les trois unités d'entraînement (10a, 10b, 10c) sont des servomoteurs.

10. Dispositif selon l'une des revendications précédentes, **caractérisé en ce que** les trois unités d'entraînement (10a, 10b, 10c) sont commandées de telle sorte que, pendant que deux éléments d'entraînement (20a, 20b, 20c) de deux unités de transfert différentes (4a, 4b, 4c) se déplacent à une distance mutuelle prédéfinie de la position de réception à la position de distribution des blisters, un élément d'entraînement (20a, 20b, 20c) de la troisième unité de transfert restante (4a, 4b, 4c) se déplace dans la position de réception des blisters.
